# FASCICULE DE BREVET EUROPEEN

(11) **EP 1 371 250 B1**
(45) Date de publication et mention de la délivrance du brevet: **19.08.2009**
(21) Numéro de dépôt: 02716891.3
(22) Date de dépôt: 14.03.2002
(51) Int. Cl.: H04W 52/02

(54) **CONFIGURATION DE PARAMETRES POUR UNE TRANSMISSION PAR PAQUETS DE DONNEES**
PARAMETERKONFIGURATION FÜR EINE PAKETDATENÜBERTRAGUNG
CONFIGURING PARAMETERS FOR DATA PACKET TRANSMISSION

(30) Priorité: 15.03.2001 FR 0103525
(43) Date de publication de la demande: 17.12.2003
(73) Titulaire: Alcatel Lucent, 75008 Paris (FR)
(72) Inventeur: SEURRE, Emmanuel, F-78000 Versailles (FR); CASTAGNET, Stéphane, F-93160 Noisy Le Grand (FR)
(74) Mandataire: Chaffraix, Sylvain
(86) Numéro de dépôt international: PCT/FR2002/000909
(87) Numéro de publication internationale: WO 2002/076125

(56) Documents cités:
- EP-A- 1 107 626
- WO-A-97/37504

## Description

La présente invention concerne le domaine de la transmission de données en radiocommunication, en particulier dans un réseau GSM(Global System for Mobile Communication - Système global pour la communication par mobiles) et en relation avec le standard GPRS (General Packet Radio Service - Service général de transmission radio par paquets),et a pour objet un procédé de configuration dynamique des paramètres utilisés pour une telle transmission.

Dans des applications GPRS ou GSM, les appareils de radiocommunication du type station mobile, portable ou analogue, peuvent être utilisés comme modems ou comme dispositifs d'interface et de transfert analogues pour la transmission de données entre un réseau de radiocommunication auquel lesdits appareils peuvent se connecter et une unité ou un terminal de traitement de données tel qu'un ordinateur, notamment un ordinateur individuel, isolé ou en réseau avec d'autres ordinateurs.

Dans de telles applications, il peut arriver que l'appareil reste en attente, par exemple après achèvement d'une séquence de transmission montante, d'une transmission descendante en retour, d'une confirmation ou d'un autre message de la part du réseau.

Une situation similaire peut se présenter lorsque l'appareil de radiocommunication est en phase de recherche d'une connexion avec un réseau adapté et notamment son réseau de rattachement, tel que décrit notamment dans le document EP-A-0 603 050.

Les conditions et le déroulement de cette attente active et notamment les opérations d'écoute et de vérifications réalisées par l'appareil de radiocommunication, permanentes ou répétitives à intervalles (réguliers ou non), sont définies par les paramètres DRX (pour "Discontinuous Réception": Réception non continue ou discontinue) imposés par le réseau et utilisant l'IMSI (International Mobile Subscriber Identity - Identité internationale d'abonné mobile). Le document WO-A-97/37504 **(Nokia)** décrit un procédé de contrôle de l'état (écoute permanente ou veille) d'une station mobile, par le réseau.

Ces paramètres, dont la valeur ou l'état doit être fixé pour définir les modalités d'écoute du réseau de la part de l'appareil, comprennent notamment le paramètre "SPLIT-PG-CYCLE" (périodicité des messages de recherche ou d'appel de paquets en mode d'attente), l'indicateur "SPLIT on CCCH" (indication de la méthode DRX utilisée : GSM ou GPRS) et le paramètre "non DRX timer" (existence ou non d'un état d'écoute permanente et durée de cet état le cas échéant après une phase de transmission de données).

En relation avec le standard GPRS, les valeurs des paramètres précités sont fixées par l'appareil de radiocommunication lors de l'attachement GPRS ou durant les procédures de localisation GPRS, ce de manière définitive pour une application donnée.

La configuration des paramètres DRX résulte d'un compromis entre l'autonomie effective ou souhaitée de l'appareil de radiocommunication (à alimentation autonome) et le degré de réactivité nécessaire ou désirée de cet appareil au niveau des requêtes d'appel et de recherche et/ou au niveau d'un transfert descendant.

Un compromis différent et propre peut être défini pour chaque application GPRS. En effet, dans certains cas, le facteur réactivité est prioritaire par rapport au facteur autonomie et, dans d'autres cas, le facteur autonomie est plus déterminant que le facteur réactivité.

Par la suite, les applications installées dans l'ordinateur ou le terminal analogue, et utilisant un support GPRS, ne peuvent actuellement procéder à aucune modification desdits paramètres DRX.

Or, il peut exister un besoin, du fait par exemple d'une modification voulue ou non des priorités des facteurs précités concernés ou d'une évolution des conditions de transmission, auxquelles éventuellement seul le terminal ou l'ordinateur est sensible, de pouvoir disposer d'une possibilité de pouvoir reconfigurer les paramètres DRX après leur configuration d'origine.

La présente invention a notamment pour objet de satisfaire ce besoin.

A cet effet, elle a pour objet un procédé de configuration des paramètres utilisés pour la transmission par paquets de données entre un terminal de traitement et/ou de transfert de données, tel que par exemple un ordinateur ou analogue, et un réseau de radiocommunication, au moyen d'un appareil de radiocommunication, notamment d'une station mobile à alimentation autonome, consistant à autoriser une configuration dynamique par le terminal de transfert et/ou de traitement des paramètres définissant un mode de réception non continu pendant le mode veille dudit appareil de radiocommunication, après leur fixation statique par ce dernier, en fonction de l'autonomie dudit appareil, de la réactivité souhaitée pour ce dernier (concernant la réponse aux appels entrants) et des besoins de transmission dudit terminal.

Selon un mode de réalisation préféré de l'invention, les paramètres concernés correspondent aux paramètres DRX définissant les conditions de réception non continue et d'écoute du réseau par l'appareil de radiocommunication, lorsque ce dernier n'est pas dans un mode communication.

La configuration desdits paramètres par le terminal comprend avantageusement les étapes consistant à :
- fixer la valeur spécifique de chaque paramètre DRX au niveau dudit terminal,
- transmettre lesdites valeurs spécifiques du terminal vers l'appareil de radiocommunication,
- lancer une procédure de requête de localisation au niveau dudit appareil de radiocommunication, afin de communiquer au réseau les valeurs spécifiques du terminal pour ces paramètres DRX.

La procédure de la requête de localisation sera lancée même lorsque la localisation de l'appareil de radiocommunication mobile n'a pas changé (au niveau identité de l'utilisateur ou identité de zone ou de lieu) afin de modifier les paramètres DRX.

En prenant en considération le fait que des paramètres DRX IE (DRX Information Element : élément d'information DRX - voir recommandation 3GPP 24.008) sont prévus dans les messages de signalisation GMM (GPRS Mobility Management : Gestion de mobilité GPRS - voir recommandation 24.008) échangés entre l'appareil de radiocommunication et le SGSN (Serving GPRS Support Node : Noeud support GPRS en service), les formats des paramètres dont les valeurs sont transmises du terminal vers l'appareil de radiocommunication correspondent aux formats des paramètres échangés entre ledit appareil et le noeud support de transmission par paquets en service (SGSN), et à ceux fixés dans la recommandation 3GPP 24.008.

Les paramètres précités comprennent au moins un champ fixant la périodicité des écoutes aux appels entrants effectuées par l'appareil de radiocommunication lorsque ce dernier n'est pas en écoute permanente ("SPLIT-PG-CYCLE" : un octet - valeur comprise entre 0 et 352), un indicateur signalant quelle méthode DRX est utilisée : GSM ou GPRS ("SPLIT on CCCH" : booléen) et un champ indiquant la période pendant laquelle l'appareil est en écoute permanente après l'achèvement d'un transfert par paquets ("non-DRX timer" : 3 bits - pas de mode non-DRX après un état de transfert, 1 s (seconde), 2 s, 4 s, 8 s, 16 s, 32 s, 64 s).

La présente invention concerne également un système pour la transmission par paquets de données d'un terminal de traitement et/ou de transfert de données, tel qu'un ordinateur personnel (PC) ou analogue, vers un réseau de télécommunication par l'intermédiaire d'un appareil de radiocommunication, notamment une station mobile à alimentation autonome, pouvant se connecter audit réseau, les paramètres définissant ladite transmission étant configurés au moyen du procédé décrit ci-dessus, notamment en ce qui concerne les paramètres DRX.

Enfin, la présente invention a également pour objet un appareil de radiocommunication, du type station mobile ou téléphone portable, à alimentation autonome, pouvant être utilisé dans un système de transmission mentionné ci-dessus.

On décrira à présent un exemple concret d'application du procédé de configuration explicité ci-dessus.

Il est tout d'abord rappelé, en relation avec ce qui suit, que le mode de transmission GPRS est lié au principe "relation client/serveur" du monde informatique.

Dans une situation de client, le mobile est configuré pour faire des connexions à Internet, Intranet, à des bases de données ou analogue. Dans une situation de serveur, le mobile peut être relié à une station météo autonome, une caméra de surveillance ou analogue.

Dans le cas où le mobile est client, celui-ci génère des appels sortants mais ne doit recevoir en principe aucun appel entrant. Le mobile envoie des requêtes vers le serveur réseau et est en attente de réponses à ces requêtes. L'utilisateur va alors vouloir privilégier pour son mobile l'aspect autonomie par rapport à l'aspect écoute périodique du réseau pour les appels entrants. Ces demandes de connexion radio entrantes se font toujours suite à l'envoie d'une requête par le mobile. Ainsi, pour pallier à une faible écoute périodique du réseau, il suffit que le mobile soit programmé pour une écoute permanente, et non pas en mode DRX, suite à un transfert de paquet pendant une durée allongée avant d'être placer en écoute discontinue, en mode DRX.

L'utilisateur va configurer le mobile via le PC en envoyant une commande AT pour demander une périodicité d'écoute du réseau la plus grande possible pour les appels entrants et pour demander une période plus importante d'écoute permanente du réseau après un transfert de paquet. Il est rappelé à ce sujet que l'écoute périodique du réseau pour les appels entrants est déterminante pour la durée de l'autonomie du mobile.

Dans le cas où le mobile est serveur, celui-ci est susceptible de recevoir des appels entrants afin d'exécuter des requêtes du client distant. D'autre part, il peut être prévu, pour ce genre d'application serveur, que le mobile puisse utiliser une batterie reliée au secteur ou utiliser un mécanisme qui lui permette de s'affranchir des problèmes d'autonomie. L'utilisateur va vouloir privilégier pour son mobile la périodicité d'écoute du réseau pour les appels entrants par rapport à l'aspect autonomie de fonctionnement. Ainsi, l'utilisateur va configurer le mobile via le PC en envoyant une commande AT pour demander une périodicité d'écoute du réseau la plus petite possible, c'est-à-dire des intervalles temporels faibles entre deux opérations d'écoute consécutives.

Bien entendu, l'invention n'est pas limitée au mode de réalisation décrit. Des modifications restent possibles, notamment du point de vue de la constitution des divers éléments ou par substitution d'équivalents techniques, sans sortir pour autant du domaine de protection de l'invention.

## Revendications

1. Procédé de configuration de paramètres utilisés pour la transmission par paquets de données entre un terminal de traitement et/ou de transfert de données, tel que par exemple un ordinateur ou analogue, et un réseau de radiocommunication, au moyen d'un appareil de radiocommunication, notamment d'une station mobile à alimentation autonome, **caractérisé en ce qu'**il consiste à autoriser une configuration dynamique par le terminal de transfert et/ou de traitement des paramètres définissant un mode de réception non continu dudit appareil de radiocommunication pendant le mode veille, après leur fixation statique par ce dernier, en fonction de l'autonomie dudit appareil, de la réactivité souhaitée pour ce dernier et des besoins de transmission dudit terminal.

2. Procédé de configuration selon la revendication 1, **caractérisé en ce que** les paramètres concernés correspondent aux paramètres DRX définissant les conditions de réception non continue et d'écoute du réseau par l'appareil de radiocommunication lorsque ce dernier n'est pas dans un mode de communication.

3. Procédé selon la revendication 2, **caractérisé en ce que** la configuration desdits paramètres DRX par le terminal comprend les étapes consistant à :
- fixer la valeur spécifique de chaque paramètre DRX au niveau dudit terminal,
- transmettre lesdites valeurs spécifiques du terminal vers l'appareil de radiocommunication,
- lancer une procédure de requête de localisation au niveau dudit appareil de radiocommunication, afin de communiquer au réseau les valeurs spécifiques du terminal pour ces paramètres DRX.

4. Procédé selon l'une quelconque des revendications 1 à 3, **caractérisé en ce que** les formats des paramètres dont les valeurs sont transmises du terminal vers l'appareil de radiocommunication correspondent aux formats des paramètres échangés entre ledit appareil et le noeud support de transmission par paquets en service.

5. Procédé selon l'une quelconque des revendications 1 à 4, **caractérisé en ce que** les formats des paramètres dont les valeurs sont transmises du terminal vers l'appareil correspondent à ceux fixés dans la recommandation 3 GPP 24.008.

6. Procédé selon l'une quelconque des revendications 1 à 5, **caractérisé en ce que** les paramètres comprennent au moins un champ fixant la périodicité des écoutes aux appels entrants vérifications effectuées par l'appareil de radiocommunication lorsque ce dernier n'est pas en écoute permanente, un indicateur indiquant quelle méthode de réception non continue est utilisée et un champ indiquant la période pendant laquelle l'appareil est en écoute permanente après l'achèvement d'un transfert par paquets.

7. Système pour la transmission par paquets de données d'un terminal de traitement et/ou de transfert de données, tel qu'un ordinateur ou analogue, vers un réseau de télécommunication par l'intermédiaire d'un appareil de radiocommunication, notamment une station mobile à alimentation autonome, pouvant se connecter audit réseau ; **caractérisé en ce que** ce terminal de traitement et/ou de transfert de données comprend des moyens pour configurer les paramètres définissant ladite transmission par cet appareil de radiocommunication, selon l'une quelconque des revendications 1 à 6, notamment en ce qui concerne les paramètres DRX.

8. Appareil de radiocommunication, du type station mobile ou téléphone portable, à alimentation autonome, **caractérisé en ce qu'**il comporte des moyens pour recevoir des commandes d'un terminal de traitement et/ou de transfert de données, auquel il est relié, afin de configurer les paramètres définissant une transmission par paquets de données selon l'une quelconque des revendications 1 à 6.

## Claims

1. Method for configuring parameters used for data packet transmission between a data processing and/or transfer terminal, such as a computer or similar, and a radiocommunication network, by means of a radiocommunication device, in particular a mobile station with an autonomous power supply, **characterised in that** it involves authorising a dynamic configuration by the transfer and/or processing terminal of the parameters defining a discontinuous reception mode of said radiocommunication device during standby mode, after static fixation of said parameters by the latter, according to the autonomy of said device, the reactivity required for said device and the transmission requirements of said terminal.

2. Configuration method according to claim 1, **characterised in that** the parameters concerned correspond to the DRX parameters defining the conditions for discontinuous reception and listening to the network by the radiocommunication device when said radiocommunication device is not in a communication mode.

3. Method according to claim 2, **characterised in that** the configuration of said DRX parameters by the terminal includes the stages involving:
- fixing the specific value of each DRX parameter at the level of said terminal,
- sending said specific values from the terminal to the radiocommunication device,
- launching a position request procedure on said radiocommunication device, in order to communicate to the network the specific values of the terminal for these DRX parameters,

4. Method according to any of claims 1 to 3, **characterised in that** the formats of the parameters for which the values are sent from the terminal to the radiocommunication device correspond to the formats of the parameters exchanged between said device and the packet transmission support node in service.

5. Method according to any of claims 1 to 4, **characterised in that** the formats of the parameters for which the values are sent from the terminal to the device correspond to those established in the recommendation 3GPP 24.008.

6. Method according to any of claims to 5, **characterised in that** the parameters include at least one field establishing the frequency of listening to incoming verification calls by the radiocommunication device when it is not permanently listening, with an indicator indicating which discontinuous reception method is used and a field indicating the period for which the device is permanently listening after the completion of a packet transfer.

7. System for data packet transmission from a data processing and/or transfer terminal, such as a computer or similar, to a telecommunication network via a radiocommunication device, in particular a mobile station with an autonomous power supple, which can be connected to said network; **characterised in that** this data processing and/or transfer terminal comprises means to configure the parameters defining said transmission by this radiocommunication device, according to any of claims 1 to 6, in particular with regard to the DRX parameters.

8. Radiocommunication device, of the mobile station or mobile telephone type, with autonomous power supply, **characterised in that** it comprises means of receiving commands from a data processing and/or transfer terminal, to which it is connected, in order to configure the parameter defining data packet transmission according to any of claims 1 to 6.

## Patentansprüche

1. Verfahren zum Konfigurieren von Parametern, welche für die paketorientierte übertragung von Daten zwischen einem Datenverarbeitungs- und/oder Datenubertragungs-Endgerät, beispielsweise einem Rechner oder ähnlich, und einem Funkkommunikationsnetzwerk verwendet werden, anhand eines Funkkommunikationsgeräts insbesondere einer Mobilstation mit autonomer Versorgung, **dadurch gekennzeichnet, dass** es darin besteht, eine dynamische Konfiguration durch das Übertragungs- und/oder Verarbeitungsendgerät der Parameter, welche einen diskontinuierlichen Empfangsmodus des besagten Funkkommunikationsgeräts im Standby-Modus nach deren statischer Festlegung durch das besagte Funkkommunikationsgerät gemäβ der Autonomie des besagten Gerätes, der für dieses Gerät gewünschten Reaktivität und den Obertragungsbedarf des besagten Endgeräts definieren, zu ermöglichen.

2. Konfigurationsverfahren nach Anspruch 1, **dadurch gekennzeichnet, dass** die betroffenen Parameter den DRX-Parametern, welche die Bedingungen des diskontinuierlichen Empfangs und der Hörbereitschaft des Netzwerks durch das Funkkommunikationsgerät definieren, entsprechen, wenn sich das besagte Funkkommunikationsgerät nicht im Kommunikationsmodus befindet.

3. Verfahren nach Anpruch 2, **dadurch gekennzeichnet, dass** die Konfiguration der besagen DRX-Parameter durch das Endgerät die folgenden Schritte umfasst:
- Festlegen des spezifischen Wertes eines jeden DRX-Parameters, am besagten Endgerät,
- Übertragen der besagten spezifischen Werte vom Endgerät an das Funkkommunikationsgerät,
- Auslösen eines Anforderungsvorgangs zur Standortbestimmung am besagten Funkkommunikationsgerät, um dem Netzwerk die spezifischen Werte des Endgeräts für diese DXR-Parameter zu übermitteln.

4. Verfahren nach einem beliebigen der Ansprüche 1 bis 3, **dadurch gekennzeichnet, dass** die Formate der Parameter, deren Werte vom Endgerät an das Funkkommunikationsgerat ubertragen werden, den Formaten der zwischen dem besagten Gerät und dem sich in Betrieb befindlichen Support-Knoten für die paketorientierte Übertragung ausgetauschten Parameter entsprechen.

5. Verfahren nach einem beliebigen der Ansprüche 1 bis 4, **dadurch gekennzeichnet, dass** die Formate der Parameter, deren Werte vom Endgerät an das Gerät übertragen werden, den in der Empfehlung 3 GPP 24,008 festgelegten Formaten entsprechen.

6. Verfahren nach einem beliebigen der Ansprüche 1 bis 5, **dadurch gekennzeichnet, dass** die Parameter mindestens ein Feld, welches die Periodizität der Hörbereitschaft auf die eingehenden Anrufe festlegt, wobei die Überprüfung durch das Funkkommunikationsgerät erfolgt, wenn sich dieses nicht in permanenter Hörbereitschaft befindet, einen Indikator, der anzeigt welches diskontinuierliche Empfangsverfahren verwendet wird, und ein Feld, welches den Zeitraum anzeigt, während welcher sich das Gerät nach Beenden einer paketorientierten Übertragung in permanenter Hörbereitschaft befindet, umfassen.

7. System für die paketorlentierte Übertragung von Daten von einem Datenverarbeitungs- und/oder Datenübertragungs-Endgerät, beispielsweise einem Rechner oder ähnlich, an ein Telekommunikationsnetz über ein Funkkommunikationsgerät, insbesondere eine Mobilstation mit autonomer Versorgung, welche sich mit dem besagten Netzwerk verbinden kann; **dadurch gekennzeichnet, dass** dieses Datenverarbeitungs- und/oder Datenübertragungs-Endgerät Mittel zum Konfigurieren der Parameter, welche die besagte Übertragung durch dieses Funkkommunikationsgerät gemäß einem beliebigen der Anspruche 1 bis 6, insbesondere in Bezug auf die DRX-Parameter, definieren, umfasst.

8. Funkkommunikationsgerät vom Typ Mobilstation oder Handtelefon, mit autonomer Versorgung, **dadurch gekennzeichnet, dass** es Mittel, zum Empfangen von Befehlen von einem Datenverarbeitungs- und/oder Datenabertragungs-Endgerät, mit welchem es verbunden ist, umfasst, um die eine paketorientierte Übertragung von Daten nach einem beliebigen der Anspruche 1 bis 6 definierenden Parameter zu konfigurieren.
